# EUROPÄISCHE PATENTANMELDUNG

(11) **EP 3 196 177 A1**
(43) Veröffentlichungstag der Anmeldung: **26.07.2017**
(21) Anmeldenummer: 16152285.9
(22) Anmeldetag: 21.01.2016
(51) Int. Cl.: C04B 7/44

(54) **WASSERSTOFF ALS BRENNSTOFF IN DER ZEMENTHERSTELLUNG**

(71) Anmelder: HeidelbergCement AG, 69120 Heidelberg (DE)
(72) Erfinder: SCHNEIDER, Volker, 69181 Leimen (DE); VAN DER MEER, Rob, 6274 Reijmerstok (NL); HAMMES, Jan, 69126 Heidelberg (DE)
(74) Vertreter: Zellentin & Partner mbB Patentanwälte

(57) **Zusammenfassung**

Die Erfindung betrifft ein Verfahren zur Herstellung von Zement umfassend die Schritte Bereitstellen eines Ausgangsmaterials für den Zement, Vorwärmen und Entsäuern des Ausgangsmaterials, Sintern des Ausgangsmaterials zu Klinker und Mahlen des Klinkers zu dem Zement, wobei die zum Vorwärmen und/oder zum Entsäuern und/oder zum Sintern benötigte Energie zumindest teilweise durch Wasserstoff als Brennstoff bereitgestellt wird. Die Erfindung betrifft weiter eine Vorrichtung zur Herstellung von Zement (z) umfassend einen Wärmetauscher (5) zum Vorwärmen und/oder Entsäuern eines Ausgangsmaterials (b) für den Zement, einen Ofen (6) zum Sintern des Ausgangsmaterials zu einem Klinker (c) und eine Vorrichtung zum Mahlen (13) des Klinkers zu dem Zement (z), wobei eine oder mehrere Feuerungen die zum Vorwärmen und/oder zum Entsäuern im Wärmetauscher benötigte Energie und/oder die zum Sintern im Ofen benötigte Energie durch zumindest teilweise Nutzung von Wasserstoff als Brennstoff bereitstellen. Die Erfindung betrifft auch die Verwendung von Wasserstoff als Brennstoff für die Bereitstellung der benötigten Energie zum Trocknen von Ausgangsmaterial und/oder zum Trocknen von anderen Brennstoffen und/oder zum Vorwärmen und/oder zum Entsäuern und/oder zum Sintern bei der Herstellung von Zement.

## Beschreibung

Die vorliegende Erfindung betrifft Verfahren und Vorrichtungen zur Herstellung von Zement sowie die Verwendung von Wasserstoff als Brennstoff für die Zementherstellung.

Zement, und hier bisher vor allem Portlandzement, ist ein wichtiger Baustoff, der weltweit in großen Mengen benötigt wird. Die Herstellung von Zement im allgemeinen und von Portlandzement im besonderen erfordert jedoch hohe Mengen Energie und ist deswegen in der Regel mit einem hohen Ausstoß an Kohlendioxid verbunden.

Es gibt bereits viele Vorschläge, den Verbrauch an Energie, aber auch an natürlichen Rohstoffen wie Kalkstein und Bauxit, die als Ausgangsmaterial eingesetzt werden, und fossilen Energieträgern wie Öl und Kohle, die als Brennstoff eingesetzt werden, zu vermindern. Zu nennen sind sekundäre Rohstoffe und alternative Brennstoffe, welche die klassischen Roh- und Brennstoffe zumindest teilweise ersetzen. Außerdem hat sich die Verwendung von Klinkerersatzmaterialien bewährt. Schließlich wird die Entwicklung alternativer Zemente vorangetrieben.

Ein anderes Problem ergibt sich durch die Umstellung der Stromerzeugung auf regenerative Quellen wie z.B. Solarstrom und Windstrom. Die Verfügbarkeit von Sonne und Wind und damit die gewinnbare Energie unterliegen natürlichen Schwankungen. Es gibt Zeiten mit hohem Überschuss an produziertem Strom und Zeiten der Knappheit, besonders wenn ein hoher Verbrauch mit wenig Sonne und Wind zusammentrifft. Wenn der Anteil der Versorgung durch regenerative Energie steigt, ist auch mit einer Zunahme an Zeiten der Überproduktion zu rechnen, da die Kapazitäten, d.h. die Anzahl und Leistung der Anlagen, auf durchschnittliche Mengen Sonne und Wind ausgelegt werden müssen. Bislang fehlt es an ausreichenden Möglichkeiten, einen Stromüberschuss sinnvoll zu verwerten, deshalb werden bei Überschuss beispielsweise Windräder abgeschaltet.

Überraschend wurde nun gefunden, dass es möglich ist, für die Zementherstellung im Drehrohrofen Wasserstoff als Brennstoff einzusetzen. Dadurch lassen sich die auf den Brennstoff zurückgehenden CO₂ Emissionen deutlich senken, da bei der Verbrennung von Wasserstoff im wesentlichen nur Wasser als Abgas entsteht.

Der Wasserstoff wird erfindungsgemäß vorzugsweise durch Elektrolyse von Wasser erzeugt, wozu im Überschuss produzierter Strom genutzt werden kann, anstatt beispielsweise Windkraftanlagen abzuschalten. Wasserstoff kann darüberhinaus vorteilhaft auch in der Vorwärmung des Rohmehls, in der Calcinierung und zur Trocknung von Rohstoffen und Brennstoffen sowie von Klinkerersatzmaterialien genutzt werden.

Die Erfindung betrifft daher ein Verfahren zur Herstellung von Zement umfassend die Schritte Bereitstellen eines Ausgangsmaterials für den Zement, Vorwärmen des Ausgangsmaterials, Entsäuern des Ausgangsmaterials, Sintern des Ausgangsmaterials zu Klinker und Mahlen des Klinkers zu dem Zement, wobei die zum Vorwärmen und/oder zum Entsäuern und/oder zum Sintern benötigte Energie zumindest teilweise durch Wasserstoff als Brennstoff bereitgestellt wird. Die Erfindung betrifft weiter eine Vorrichtung zur Herstellung von Zement umfassend einen Wärmetauscher zum Vorwärmen und Entsäuern eines Ausgangsmaterials für den Zement, ggfs. einen Calcinator, einen Ofen zum Sintern des Ausgangsmaterials zu einem Klinker und eine Vorrichtung zum Mahlen des Klinkers zu dem Zement, wobei eine oder mehrere Feuerungen die zum Vorwärmen im Wärmetauscher und/oder zum Calcinieren im Calcinator und/oder zum Sintern im Ofen benötigte Energie durch zumindest teilweise Nutzung von Wasserstoff als Brennstoff bereitstellen. Die Erfindung betrifft auch die Verwendung von Wasserstoff als Brennstoff für die Bereitstellung der benötigten Energie zum Trocknen von Ausgangsmaterial und/oder zum Trocknen von anderen Brennstoffen und/oder zum Vorwärmen und/oder zum Entsäuern und/oder zum Sintern bei der Herstellung von Zement.

Vorschläge zur Nutzung von Wasserstoff als Ersatz oder Ergänzung für fossile Brennstoffe gab es bereits, vor allem in Bezug auf Verbrennungsmotoren. Auch eine Vielzahl Vorschläge für Vorrichtungen und Verfahren zur Elektrolyse sind bekannt. Beispielhaft sollen hier erwähnt werden: JP H 1121572 A, KR 2002 0061067 A, JP 2009 019812 A. WO 2007/133174 A1, WO 2009/032190 A2 und WO 2015/033030 A1 für die allgemeine Anwendung von Wasserstoff als Brennstoff sowie CN 2784757 Y, WO 02/13577 A1, US 2007/0151846 A1, WO 2008/154721 A1 und WO 2015/010047 A1 für Vorschläge zur Nutzung von Wasserstoff als Treibstoff in Automobilen, für Schweißbrenner, in der Müllverbennung, zur Wassererwärmung bzw. Heizung und in Düsentriebwerken.

Im Rahmen der Zementherstellung sei auf folgenden Stand der Technik hingewiesen. Gemäß DE 203 20 020 U1, DE 10 2013 010 909 B3, WO 2015/055349 A1, WO 2011/101217 A2 und US 2003/0183179 A1 soll bei der Zementherstellung emittiertes CO₂ mit elektrolytisch erzeugtem Wasserstoff zu synthetischem Erdgas, Methan, Methanol und/oder Diesel umgesetzt werden. In einigen dieser Dokumente wird, wie z.B. auch in der JP 2004/100679, vorgeschlagen, den parallel erzeugten Sauerstoff zur Optimierung der Verbrennung zu nutzen.

In keinem dieser Dokumente findet sich der Vorschlag, den Wasserstoff selber als Brennstoff für die Zementherstellung einzusetzen.

Die Verfahren, Vorrichtung und Verwendung zur Nutzung von Wasserstoff als Brennstoff gemäß der Erfindung bieten aber große Vorteile. Wie bereits gesagt ist Wasserstoff ein Brennstoff, dessen Verbrennung kein CO₂ freisetzt. Wird daher ein Teil der zur Zementherstellung benötigten Energie durch Wasserstoff bereitgestellt, kann dadurch ein entsprechender Teil der CO₂-Emmissionen gespart werden. Wird der Wasserstoff zudem durch Elektrolyse von Wasser mit Stromüberschüssen, insbesondere aus regenerativen Energiequellen wie z.B. Sonne, Wind, und Wasserkraft, gewonnen, fällt auch bei der Bereitstellung des Wasserstoffs kein zusätzliches CO₂ an. Besonders vorteilhaft kann der zugleich erzeugte Sauerstoff wie an sich bekannt zur Optimierung der Verbrennung ebenfalls in der Zementherstellung genutzt werden. Außerdem kann er ganz oder teilweise als zusätzliches Produkt vermarktet werden. Auch eine zumindest teilweise Zwischenlagerung ist denkbar.

Das erfindungsgemäße Verfahren zur Herstellung von Zement entspricht überwiegend der bekannten Herstellung von Zement. So werden üblicherweise zunächst Rohstoffe bereitgestellt, aus denen dann durch Trocknen, Mahlen und Mischen das Ausgangsmaterial erzeugt wird.

Alle an sich bekannten Rohstoffe sind erfindungsgemäß geeignet, also neben den klassischen Rohstoffen Kalkstein, Mergel, Bauxit, Ton / Tonstein, Basalte, Periodite, Dunite, Ingnimbrite, Karbonatite usw. insbesondere auch alternative Rohstoffe. Hierzu zählen beispielsweise aber nicht ausschließlich Aschen / Schlacken / Hüttensande hoher und geringer Qualität (Mineralogie / Glasgehalt, Reaktivität, etc.), diverse Haldenmaterialien, Rot- und Braunschlämme, natürliche Sulfatträger, Entschwefelungsschlämme, Phosphorgips und andere industrielle Neben- und Abfallprodukte.

In der Regel werden die Rohstoffe gemahlen und zu einem Rohmehl als Ausgangsmaterial vermischt. Eine Trocknung ist nur notwendig und erfolgt auch nur, wenn die Rohstoffe feucht (Wasseranteil > 0,2 %) sind. Die Trocknung kann erfindungsgemäß mit Wasserstoff als dem oder einem der Energieträger erfolgen. Es ist üblich, Rohmehl in einem Silo zu lagern, aus dem es der Vorwärmung zugeführt wird.

Typischerweise wird das Ausgangsmaterial einer Vorwärmung und Entsäuerung in einem Wärmetauscher unterzogen, bevor es in den Ofen gelangt. In modernen Ofenanlagen handelt es sich bei dem Wärmetauscher um einen Zyklonwärmetauscher, der optional einen Calcinator beinhalten kann. In beiden Varianten wird das Rohmehl auf die oberste Zyklonstufe aufgegeben und durch im Gegenstrom geführtes Ofenabgas erhitzt. Dabei steigt die Temperatur des Rohmehls von der obersten zur untersten Zyklonstufe sukzessive an. Das im Rohmehl enthaltene CaCO₃ wird durch die steigende Temperatur zunehmend entsäuert. Bei Zyklonwärmetauschern ohne Calcinator finden ca. 50 - 70 % der Entsäuerung im Wärmetauscherturm statt. Die Restentsäuerung (Calcinierung) findet dann im Ofens statt. Bei der Variante mit Calcinator ist dieser oberhalb der untersten Zyklonstufe angeordnet. Im Calcinator werden das Rohmehl und die Ofenabgase vermischt und durch eine Flamme unter Brennstoffzufuhr erhitzt. Durch den Calcinator wird das Rohmehl zu über 90 % entsäuert.

In einer Ausführungsform der Erfindung erfolgt in einer oder mehren Stufen der Vorwärmung und/oder im Calcinator die Sekundärfeuerung ganz oder bevorzugt teilweise mit Wasserstoff als Brennstoff. Vorzugsweise wird Wasserstoff in der untersten, der zweituntersten oder in den beiden untersten Stufen der Vorwärmung oder in der Calcinierung als Brennstoff verwendet. Als unterste Stufe wird die Stufe bezeichnet, welche dem Ofen am nächsten liegt, d.h. die Stufe aus der das Ausgangsmaterial in den Ofen geführt wird.

Vom Wärmetauscher (mit oder ohne Calcinator) gelangt das vorgewärmte und zumindest teilweise entsäuerte Ausgangsmaterial in den Ofen. Typischerweise handelt es sich bei dem Ofen um einen Drehrohrofen. Im Ofen wird das Ausgangsmaterial zum Klinker gesintert. Sofern zuvor keine vollständige Entsäuerung erfolgt war, findet im Einlaufbereich des Ofens die Restentsäuerung statt. Die im Ofen benötigte Energie wird durch eine Feuerung (üblicherweise die Primärfeuerung) bereitgestellt, bei der erfindungsgemäß Wasserstoff zumindest teilweise als Brennstoff genutzt wird. Daneben können und werden bevorzugt die bekannten klassischen Brennstoffe wie Öl, Kohle, usw. und die bekannten alternativen Brennstoffe wie Kunststoffe als Brennstoff verwendet. Diese können gemeinsam bzw. im Wechsel mit Wasserstoff genutzt werden. Es ist besonders bevorzugt, Wasserstoff nur dann alleine oder vorzugsweise zusätzlich als Brennstoff zu verwenden, wenn überschüssiger, d.h. anders nicht sinnvoll nutzbarer, Strom zur Verfügung steht. Bei dieser Ausführungsform sind keine Speicher für eine Lagerung von Wasserstoff nötig. Die Ofenfeuerung kann einen oder mehrere Brenner umfassen, die sowohl Wasserstoff als auch die bekannten Brennstoffe gemeinsam umsetzen. Alternativ wird für den Wasserstoff ein (oder mehrere) Separatbrenner verwendet.

Vorzugsweise ersetzt Wasserstoff andere Brennstoffe nur teilweise. Geeignet sind zum Beispiel bis zu 50 % der Energie aus Wasserstoff, vorzugsweise bis zu 40 % und besonders bevorzugt bis zu 30 %. Bei größeren Anlagen ab 2500 Tagestonnen erscheinen bis zu 25 % der Energie aus Wasserstoff sinnvoll. Eine untere Grenze ist nicht gegeben, auch eine kleine Einsparung von CO₂ lohnt sich im Sinne der Umwelt. In der Praxis sollten jedoch zweckmäßig wenigstens 5 %, bevorzugt wenigstens 10 % der Energie aus Wasserstoff gewonnen werden.

Die anderen Brennstoffe können fossile Brennstoffe sein, insbesondere Braunkohle, Steinkohle, Petrolkoks, Erdgas, Brennstoffe aus der Verarbeitung mineralölhaltiger natürlicher Stoffe (z.B. Ölschiefer, Ölsande, ...), Schweröl und leichtes Heizöl. Vorzugsweise sind es aber zumindest zum Teil alternative Brennstoffe wie beispielsweise aber nicht ausschließlich Reifen, Tiermehl, Klärschlämme, Lösemittel, Brennstoffe aus Produktionsspezifischem Gewerbeabfall (BPG), Kunststoffabfälle, Altholz.

Wie an sich bekannt kann der Ofenfeuerung und/oder der Ofenzuluft Sauerstoff zugeführt werden, um die Verbrennung zu optimieren. Wird der Wasserstoff durch Elektrolyse von Wasser erzeugt, bietet sich der zwangsläufig mit erzeugte Sauerstoff hierfür an. Natürlich kann auch zugelieferter Sauerstoff eingesetzt werden. Durch die Sauerstoffzufuhr verbessern sich die Prozess-/Verbrennungsbedingungen. Beispielsweise wird, insbesondere bei grobteiligem Brennstoff, eine vollständigere Verbrennung erreicht, reduzierende Bedingungen können vermieden werden.

Im Anschluss an den Ofen wird der Klinker gekühlt und, ggfs. nach Lagerung in einem Klinkersilo, zum Zement vermahlen. Bei der Mahlung können weitere Komponenten wie z.B. aber nicht ausschließlich Sulfatträger und/oder Klinkerersatzmaterialien, zugefügt werden. Diese Komponenten können bei Bedarf einer Trocknung unterzogen werden, in welcher ebenfalls Wasserstoff zumindest teilweise als Energieträger verwendet werden kann. Die Mahlung sowie die weitere Verarbeitung und Nutzung des Zements sind dem Fachmann bekannt und werden daher hier nicht näher beschrieben.

Der als Brennstoff eingesetzte Wasserstoff wird wie erwähnt bevorzugt durch Elektrolyse von Wasser vor Ort erzeugt. Der mit erzeugte Sauerstoff kann dabei vorteilhaft der Ofenfeuerung oder einer anderen Feuerung des Ofensystems, wie z.B. einer Sekundärfeuerung eines Calcinators, zugeführt werden. Es liegt aber im Rahmen der Erfindung, den Wasserstoff (auch) auf andere Weise, z.B. durch chemische Reaktion, zu erzeugen und/oder aus externen Quellen zu beziehen.

In einer Ausführungsform sind für den Wasserstoff Tanks vorgesehen, insbesondere für eine Speicherung von verflüssigtem Wasserstoff. Tanks stellen den Wasserstoff unabhängig von seiner Erzeugung bereit. Lagert der Wasserstoff in dem Tank in verflüssigter Form, so wird er mit geeigneter Verdampfer/Dosiertechnik dem Brenner zugeführt.

In einer anderen Ausführungsform wird Wasserstoff nur dann als Brennstoff genutzt, wenn ein Bedarf an einer Nutzung von überschüssigem Strom besteht. Hierbei kann auf eine Lagerung verzichtet werden. Der erzeugte Wasserstoff kann z.B. einfach über eine Komprimierung, einen Windkessel und ein Ventil dem Brenner zugeführt werden.

Es ist bevorzugt, den Wasserstoff durch Elektrolyse von Wasser zu erzeugen. Verfahren und Vorrichtungen dazu sind bekannt und werden hier nicht näher beschrieben. Der Strom kann insbesondere bei Überschuss aus dem Netz bezogen werden. Alternativ oder zusätzlich kann Strom durch eine Restwärmenutzung direkt im Zementwerk erzeugt werden. Auch eine Eigenerzeugung im Zementwerk mittels erneuerbarer Energie wie beispielsweise Wind, Sonne und/oder Biogas kann zweckmäßig sein. Der bei der Elektrolyse anfallende Sauerstoff kann in der Zementherstellung verwendet, aber auch als eigenes Produkt vermarktet werden.

Die Erfindung soll anhand der beigefügten Figuren erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung. Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

Dabei zeigt:
Figur 1 eine erfindungsgemäße Vorrichtung schematisch;
Figur 2 eine erste Variante für die Wasserstoffzufuhr und
Figur 3 eine zweite Variante für die Wasserstoffzufuhr.

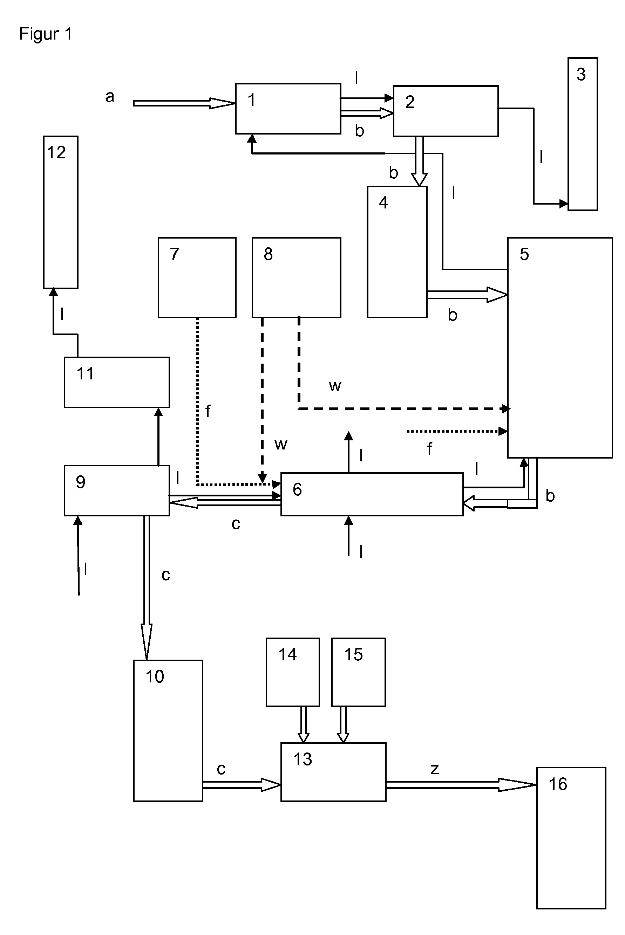

In Figur 1 sind die Vorrichtungen eines Zementwerks schematisch gezeigt. Feststoffströme sind mit schwarz umrahmten Pfeilen dargestellt, Luft-/ Gasströme mit einfachen Pfeilen. Wasserstoff w wird mit gestrichelten Pfeilen, bekannte Brennstoffe f mit gepunkteten Pfeilen dargestellt.

Die Rohstoffe a werden, ggfs. nach einer Trocknung, zunächst in einer Mühle 1 zerkleinert, dabei gemischt und evtl. weiter getrocknet. Im Anschluss an die Mühle trennt ein Filter 2 das Rohmehl b von der Luft I, letztere wird als Abgas durch einen Kamin 3 abgeführt. Das Rohmehl b gelangt in ein Silo 4, von dem aus es in den Wärmetauscher 5, typischerweise ein Zyklonwärmetauscher, geführt wird.

Im Wärmetauscher 5 erfolgt die Vorwärmung und auch eine Entsäuerung des Rohmehls. Dazu wird einerseits das Abluft/Gasgemisch I aus dem Ofen 6 im Gegenstrom zum Rohmehl dem Wärmetauscher 5 zugeführt, andererseits wird der Wärmetauscher 5 mit Sekundärfeuerungen (nicht dargestellt) beheizt. Diese können mit herkömmlichen klassischen und alternativen Brennstoffen betrieben werden und/oder gemäß der Erfindung wird zumindest zum Teil Wasserstoff w verwendet.

Das voll (oder ohne Calcinator im Wärmetauscher teilweise) entsäuerte Rohmehl b gelangt dann in den Ofen 6, der in der Regel ein Drehrohrofen ist. Die Ofenfeuerung (nicht dargestellt) befindet sich im hinteren Bereich des Ofens 6 und ist so ausgebildet, dass neben den bekannten Brennstoffen f aus dem Vorrat 7 auch Wasserstoff w aus einem Vorrat bzw. einer Elektrolyseanlage 8 verbrannt werden kann. Der Ofen 6 kann neben der Zuluft aus dem Kühler 9 weitere Zufuhrmöglichkeiten für Luft I - insbesondere und unter anderem Primärluft - aufweisen. Gegebenenfalls kann eine Abfuhr von Mittenluft erfolgen, um Strom zu gewinnen. Im Ofen 6 wird das Rohmehl wie an sich bekannt zu Klinker c gesintert sowie im Einlaufbereich ggfs. vollständig entsäuert.

Der Klinker c verlässt den Ofen 6, evtl. im Bereich zwischen Feuerung und Ofenauslauf bereits etwas abgekühlt, und tritt in den Kühler 9 ein. Im Kühler 9 wird Luft I im Gegenstrom zum Klinker c geführt, dadurch vorgewärmt und dann in den Ofen 6 geleitet. Der abgekühlte Klinker c gelangt in ein Silo 10, ein Teil der Kühlluft I wird in einem Filter 11 gereinigt und über den Kamin 12 abgeführt.

Im letzten Schritt wird der Klinker c in der Mühle 13 zu Zement z gemahlen. Bei der Mahlung können bereits weitere Komponenten wie Sulfatträger oder falls gewünscht Klinkerersatzmaterialien aus den Silos 14 und 15 zugefügt werden. Es ist selbstverständlich auch möglich, den aus dem Kühler 9 austretenden Klinker c direkt der Mühle 13 zuzuführen. Die Mahlung erfolgt in an sich bekannter Weise. Der erhaltene Zement z kann dann in einem Silo 16 zwischengelagert oder direkt abgepackt werden.

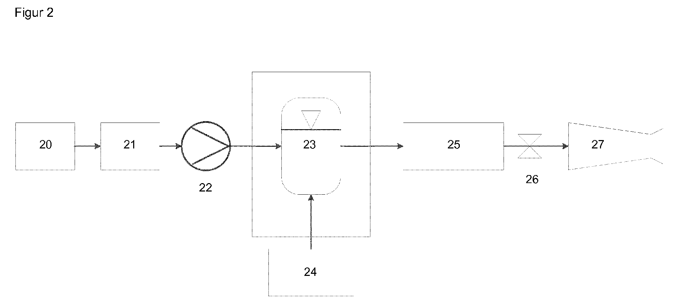

Figur 2 zeigt eine erste Variante der Verwendung von Wasserstoff als Brennstoff. Hierbei wird elektrische Energie (Strom 20) zur Elektrolyse von Wasser in einer Vorrichtung 21 genutzt, der erzeugte Wasserstoff in Vorrichtung 22 verflüssigt und in einem Tank 23 gelagert. Der Tank kann daneben auch durch Zulieferung 24 mit extern erzeugtem Wasserstoff befüllt werden. Der erzeugte Sauerstoff wird entweder auch verflüssigt und gelagert bzw. als Produkt vertrieben, oder er wird in der Zuluft des Zementwerkes genutzt. Soll Wasserstoff als Brennstoff genutzt werden, wird er aus dem Tank 23 in einen Verdampfer 25 und von dort über Dosiervorrichtungen wie z.B. ein Ventil 26 in die Feuerung 27 geführt.

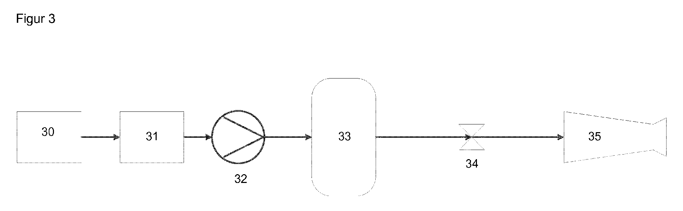

Die Variante der Wasserstofferzeugung in Figur 3 ist für die direkte Verwendung des Wasserstoffs in der Feuerung gedacht. Hier erfolgt ebenfalls eine Elektrolyse 31 von Wasser mit elektrischer Energie 30, der Sauerstoff wird wie vor verwendet. Der erzeugte Wasserstoff gelangt über eine Komprimierung 32 in einen Windkessel 33, aus dem er ebenfalls über Dosiervorrichtungen 34 der Feuerung 35 zugeführt wird. Diese zweite Variante ist anlagentechnisch weniger aufwändig, dafür ist der Einsatz von Wasserstoff als Brennstoff auf Zeiten einer wirtschaftlichen Verfügbarkeit von elektrischer Energie beschränkt.

### Bezugszeichenliste

- a: Rohstoffe
- b: Ausgangsmaterial
- c: Klinker
- f: Brennstoffe außer Wasserstoff
- l: Luft
- w: Wasserstoff
- z: Zement

- 1: Rohstoffmühle
- 2: Filter
- 3: Kamin
- 4: Silo für Rohstoffe
- 5: Wärmetauscher
- 6: Ofen
- 7: Brennstoffvorrat außer Wasserstoff
- 8: Wasserstofftank oder Elektrolyse
- 9: Klinkerkühler
- 10: Silo für Klinker
- 11: Filter
- 12: Kamin
- 13: Mühle für Zement
- 14, 15: Silos für weitere Komponenten
- 16: Zementsilo
- 20: Strom
- 21: Elektrolysevorrichtung
- 22: Vorrichtung zur Verflüssigung von H₂
- 23: Tank für H₂
- 24: Zulieferung von H₂
- 25: Verdampfer
- 26: Regelventil
- 27: Brenner

- 30: Strom
- 31: Elektrolysevorrichtung
- 32: Vorrichtung zur Komprimierung von H₂
- 33: Windkessel
- 34: Regelventil
- 35: Brenner

## Patentansprüche

1. Verfahren zur Herstellung von Zement umfassend die Schritte Bereitstellen eines Ausgangsmaterials für den Zement,
Vorwärmen und Entsäuern des Ausgangsmaterials,
Sintern des Ausgangsmaterials zu Klinker und
Mahlen des Klinkers zu dem Zement,
**dadurch gekennzeichnet, dass**
die zum Vorwärmen und/oder zum Entsäuern und/oder zum Sintern benötigte Energie zumindest teilweise durch Wasserstoff als Brennstoff bereitgestellt wird.

2. Verfahren gemäß Anspruch 1, **dadurch gekennzeichnet, dass** das Ausgangsmaterial in einem Zyklonwärmetauscher unter einem Gegenstrom von Luft und Gas aus dem Ofen erwärmt und zumindest teilweise entsäuert wird.

3. Verfahren gemäß Anspruch 2, **dadurch gekennzeichnet, dass** in einer oder mehren Stufen der Vorwärmung und/oder Entsäuerung eine Sekundärfeuerung ganz oder bevorzugt teilweise mit Wasserstoff als Brennstoff betrieben wird.

4. Verfahren gemäß Anspruch 3, **dadurch gekennzeichnet, dass** Wasserstoff in der untersten und/oder der zweituntersten Stufe der Vorwärmung und Entsäuerung als Brennstoff verwendet wird.

5. Verfahren gemäß einem der Ansprüche 1 bis 4, **dadurch gekennzeichnet, dass** die im Ofen zur Sinterung benötigte Energie zumindest teilweise durch Wasserstoff als Brennstoff bereitgestellt wird.

6. Verfahren gemäß Anspruch 5, **dadurch gekennzeichnet, dass** neben Wasserstoff, gemeinsam oder im Wechsel, andere Brennstoffe verwendet werden

7. Verfahren gemäß einem der Ansprüche 1 bis 6, **dadurch gekennzeichnet, dass** der Wasserstoff aus einer Elektrolyse von Wasser gewonnen wird.

8. Verfahren gemäß Anspruch 7, **dadurch gekennzeichnet, dass** Wasserstoff nur zu den Zeiten als Brennstoff verwendet wird, in denen Strom preisgünstig oder aus Stromüberschüssen zur Verfügung steht.

9. Verfahren gemäß Anspruch 7 oder 8, **dadurch gekennzeichnet, dass** der bei der Elektrolyse mit gebildete Sauerstoff einer Feuerung zum Sintern und/oder einer Feuerung zum Vorwärmen und Entsäuern zugeführt wird.

10. Vorrichtung zur Herstellung von Zement (z) umfassend einen Wärmetauscher (5), vorzugsweise einen Zyklonwärmetauscher, zum Vorwärmen und Entsäuern eines Ausgangsmaterials (b) für den Zement (z), einen Ofen (6), vorzugsweise einen Drehrohrofen, zum Sintern des Ausgangsmaterials (b) zu einem Klinker (c) und
eine Vorrichtung zum Mahlen (13) des Klinkers (c) zu dem Zement (z), **dadurch gekennzeichnet, dass**
eine oder mehrere Sekundärfeuerungen die zum Vorwärmen und/oder zum Entsäuern im Wärmetauscher (5) benötigte Energie und/oder eine Ofenfeuerung die zum Sintern im Ofen (6) benötigte Energie durch zumindest teilweise Nutzung von Wasserstoff (w) als Brennstoff bereitstellen.

11. Vorrichtung gemäß Anspruch 10, **dadurch gekennzeichnet, dass** die Ofenfeuerung einen oder mehrere Brenner aufweist, der/die sowohl Wasserstoff (w) als auch andere Brennstoffe (f) gemeinsam verbrennen kann/können.

12. Vorrichtung gemäß Anspruch 10, **dadurch gekennzeichnet, dass** die Ofenfeuerung einen Separatbrenner für den Wasserstoff (w) aufweist.

13. Vorrichtung gemäß einem der Ansprüche 10 bis 12, **dadurch gekennzeichnet, dass** der Wärmetauscher einen Calcinator mit einer Sekundärfeuerung umfasst.

14. Vorrichtung gemäß einem der Ansprüche 10 bis 13, **dadurch gekennzeichnet, dass** sie eine Elektrolyseanlage zur elektrolytischen Erzeugung des Wasserstoff aus Wasser umfasst.

15. Vorrichtung gemäß einem der Ansprüche 10 bis 14, **dadurch gekennzeichnet, dass** sie einen Tank für den Wasserstoff umfasst.

16. Verwendung von Wasserstoff als Brennstoff für die Bereitstellung der benötigten Energie zum Trocknen von Ausgangsmaterial und/oder zum Trocknen von anderen Brennstoffen und/oder zum Vorwärmen und/oder zum Entsäuern und/oder zum Sintern des Ausgangsmaterials bei der Herstellung von Zement.
